# EUROPEAN PATENT APPLICATION

(11) **EP 3 653 799 A1**
(43) Date of publication of application: **20.05.2020**
(21) Application number: 17917301.8
(22) Date of filing: 14.07.2017
(51) Int. Cl.: E03B 3/28, B01D 45/08

(54) **FOG COLLECTOR OR DEVICE FOR COLLECTING THE WATER PRESENT IN THE ATMOSPHERE**

(71) Applicant: Tejada Herrera, Alberto Ricardo, Lima 17 (PE)
(72) Inventor: Tejada Herrera, Alberto Ricardo, Lima 17 (PE)
(74) Representative: Herrero & Asociados, S.L.
(86) International application number: PCT/PE2017/000013
(87) International publication number: WO 2019/013654

(57) **Abstract**

The proposed invention refers to a fog collector consisting of a tubular structure, preferably hexagonal in shape, which supports a membrane or mesh of one or more layers to retain water that is present in the air in high-moisture environments and of a mounting structure. The modular element comprises tubular segments in the bottom part of which there are two collection trays made up of tubular segments the top of which is open longitudinally and closed at each of the ends thereof. The water collected in the mesh is guided by gravity to the trays from which the water is led to a reservoir for consumption or diverted to other modular elements.

## Description

### TECHNICAL FIELD

The invention relates to a fog collector with an atmospheric water-collecting device of use in the housing, agricultural and mining sectors and, in general, in any place where water provision is necessary.

### STATE OF THE ART

Currently, there are a variety of fog collection systems designed to capture the water present in the air; one of these types comprises meshes arranged on poles on which the water contained in the atmosphere is condensed and flows downwards due to gravity; at the bottom there are containers to collect the water and at least one pipe to guide it to a particular place.

An example of this type of fog collector is disclosed in the Chinese patent CN204418276 (U) by YANG LIU, LI CHAO and MA SUDE, published on 2015-06-24, which describes a platform for collecting fresh water from the fog, mainly composed of a water collection net, a support and a water collection drainage device. The water collection net consists of metal wires coated with a super-hydrophilic titanium dioxide film. The bottom end of the support is arranged in the center of the conical drainage device, where the water is collected and is provided with a slot and an outlet pipeline. The water collection net is placed perpendicularly and embedded in the slot of the water collection drainage device.

The main disadvantage of this fog collector is the cost involved in using materials such as titanium to manufacture the meshes; furthermore, this solution is not designed for a progressive growth of the fog collector area. Another example of a fog collector is disclosed in the German patent DE202014105100 U1 by WasserStiftung, published on 2014-10-24, which describes a fog collector that is characterized by its resistance to high-speed winds. The support structure is made up of two (2) vertical metal pipes that function as columns and two (2) more horizontal pipes that together form a rectangular structure or frame within which the collection meshes are placed; this rectangular structure is attached to the ground by means of a concrete foundation. The fog collector collects moisture from the incoming air through two spaced meshes or grids, with a synthetic mesh behind which another rigid mesh is placed for the mechanical stabilization of the first mesh to prevent the collection mesh from being torn by the wind; in such an arrangement, it is possible that water droplets that have passed with the wind from the first collection grid can be collected in the second grid, which can maximize the amount of water collected. Both meshes are fixed to the support structure with elastic fasteners. This fog collector also has a collection tray for the water drops obtained through the collection meshes. The tray is located under the meshes and is held in place by anchors similar to those used on the meshes. This tray can be made of plastic, such as polyethylene, and/or stainless steel.

The most outstanding innovation in this fog collector is the rigid support mesh, which is important to withstand high-speed winds, but increases the cost of the fog collector. In addition, the product is not easily removable, which restricts its mobility in case dismantling is necessary, and it is designed exclusively for open-field installation.

A further example is disclosed in John Klemic's patent US6869464 B2, published on 2005-03-22, which describes a device for the absorption of atmospheric moisture with a super absorbent polymer whose applications include dehumidification, fog dispersion, and water recovery. This device has three mounting alternatives. The first consists of a horizontal element that supports a super-absorbent polymer mesh. Two vertical support posts are used, as well as a mesh suspended from the horizontal element by means of a cable attached with hooks and a set of pulleys. The poles are between 4 and 20 feet high and are separated according to the weight of the mesh when it is fully loaded with atmospheric water. Underneath the mesh is a container to collect water therefrom. The container has a rotating tube at the bottom that allows water to be removed from it. The frame that supports the mesh is extended selectively to collect atmospheric humidity through the use of pulleys that are connected to the fixing cable and a crank. The base container has a frame to support the mesh when not in use. In another type of mounting, the invention is supported by four height-adjustable legs. The base at the bottom has a small slope and a drainage pipe. Finally, the third mounting alternative is composed of elements similar to the first case only that with a plastic cover as a roof on the set of meshes arranged in parallel. Although the invention focuses on the quality of the polymer, it is not easy to mount and dismount, and the reduced area of the mesh compared to the volume of the device makes it inefficient. It is also not intended for mounting in buildings.

### DESCRIPTION OF THE INVENTION

This invention was developed as a solution to the above-mentioned problems. The proposed fog collector comprises a modular element (A) consisting of a hexagonal tubular structure supporting a membrane (6) capable of retaining the water that is present in the air in high-moisture environments and a mounting structure. The modular element consists of a top part (B) made up of three tubular segments (4) and a bottom part (C) made up of two side collection trays (7) and a bottom collection tray (9). The bottom trays are made up of tubular segments (7, 9) the top of which is open longitudinally and closed at each of the ends thereof.

In each modular element, the water collected in the mesh is guided by gravity towards the side collection trays (7) and to the bottom collection tray (9) which has a central fitting (8) with an outlet pipe (10) from where the water is conducted to the building for consumption or diverted to other modular elements through the pipe fitting (8) provided with an outlet (10). The collection trays have a grid (12) on top, which prevents leaves, birds or foreign objects from entering the water.

The modular element (A) has preferably a hexagonal shape to facilitate mounting between modules to configure a multi-modular structure that can grow to form a fog collector of the required size; for this purpose a fitting (8) is available with an upper inlet pipe and a lower outlet pipe (10).

Each fitting (8) consists of: a T-shaped tubular body (13), each end provided with an orifice; this fitting has two protuberances (11) parallel and arranged side by side for the fixing of the membrane (6); these protuberances are arranged towards the interior of the module and are provided with a central hole where a strap is inserted to fix the membrane (6) inside each module; the side ends of the module have a coupling (14) with an external diameter slightly smaller than the diameters of the ends of the tubular segments, so the fitting can fit the tubular structure (4) to the ends of the tubular segments; it also has an outlet pipe (16) and an inlet pipe (15) depending on whether it is the inlet fitting (8) or the outlet fitting (10), which allow the connection of a top module with a bottom module and also allow the passage of water from the top module to the bottom module.

The fixing structure of each module to fix them on a vertical surface is made up of the following elements: connecting elements (3), supports (2) with anchorage blocks (1) located at each of the angles of the modular element that allow the modular structure (A) to be fixed to the building. Alternatively, the anchorage (1) is equipped with a removable suction cup (17) for fixing the modular element on the surface of the building in case of glass or other smooth surface; in this case, the structure can thus be easily removed without the use of tools. Alternatively, these anchoring elements can also have variable lengths thanks to the plunger (3) or piston that enters the support (2); additionally, a ball joint (5) located inside the joint (18) of the modular structure fixing system (4) allows an arrangement of the modules with different angles in relation to the vertical surface of the building.

On its structure, the mesh or membrane (6) has some filaments that stick out towards both sides of the mesh, generating a hairiness that increases the area of the membrane water collection elements.

The water collection element, that is, the mesh or membrane, (6) can be arranged in two or more layers parallel to each other, so that the filaments retain much more water from the atmosphere. That is, the addition of several membrane layers allows a higher percentage of water to be collected from the atmosphere, reducing the loss or quantity of humid air that passes through the membrane without the water contained in the humid air being retained. By placing two mesh layers, it is possible to have up to 2 m² of membrane in 1 m² of structure, which is achieved by folding the layers like an accordion or bellows. In this way, more m² of collecting surface are obtained by m² of building facade. Each structure is a module. By joining several modules, the facade of a building can be covered with the number of modules required for an adequate water supply.

In an alternative installation form, the modules can also be self-supporting on the ground in case open-field humidity collection is required. To this end, the modules that are to be in contact with the ground must be separated from it by means of stakes (19) that must be inserted into the ground to secure the system.

The connection between the modules is made by means of the outlet fittings (10) which are pressed into the inlet fittings (8) in another module. The water collected from the fog is thus guided by gravity from one module to another.

The tubular structure (4) of the module is anchored to an external wall of the building or to a glass surface of the building, in the latter case by means of suction cups (17) as mentioned above. For installation, priority should be given to those walls or vertical elements of the building facing the prevailing wind direction.

In the case of open-field installation, the module is anchored directly to the ground by means of stakes (19).

The union of several modules forms a structurally rigid unit that can be adapted to the measure indicated by the surface to be covered or by the required water needs.

In each module, the water that drains from the mesh (6) by gravity is guided through the side collection trays (7) to the bottom collection tray (9) and introduced into the building for use as required, either directly to the green areas and sanitary appliances, or to the cistern in a dual system, from where it is pumped to the bathrooms. Before leaving the bottom collection tray (9), the water passes through a filter (20) to remove dust and foreign bodies. The receiving tray is also protected by a grid (12) to avoid the presence of leaves and larger objects.

### ADVANTAGES OF THE PROPOSED FOG COLLECTOR

Contrary to what has been reported by the state of the art, the configuration of the modular element allows:
- Joining several modules to generate a multi-modular structure according to the water requirement and the available surface.
- Taking the water from a top to a bottom module by gravity by means of the tubular structure and the outlet and inlet fittings.
- A greater water collection in relation to existing systems.
- A low production cost.
- Using the membranes as sunscreens, in case the structure is installed on a window or glass. This can reduce the heat inside the building and avoid glare, which reduces the energy consumption required to cool the building.
- Reducing humidity inside the building, protecting the building movable assets and construction elements.
- The customization of the building facade, as it may vary its appearance over time according to the water and solar protection requirements of the occupants, as well as the color combinations.

### BRIEF FIGURE DESCRIPTION

The attached figures illustrate only exemplary realizations of the invention and should not be considered as limiting its scope; the invention may admit other equally effective realizations.

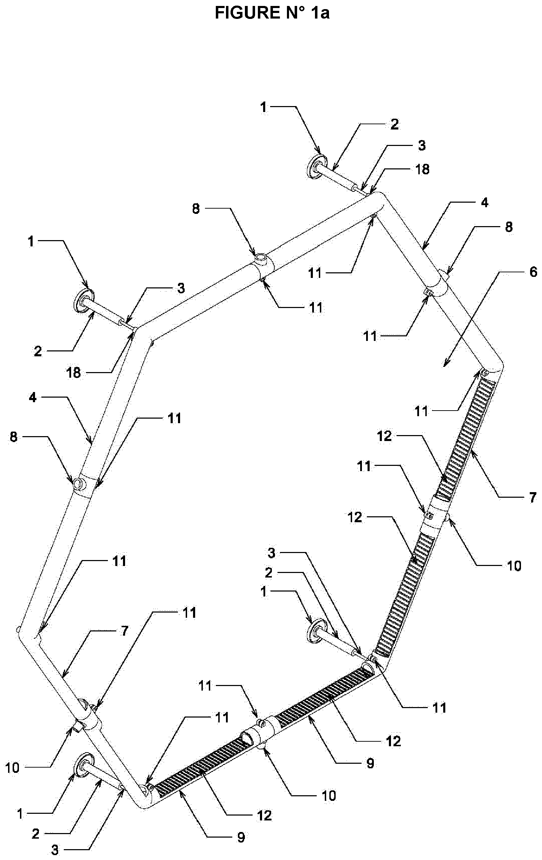

**FIGURE No.** 1a: An isometric view of the invention is shown, where the parts that make up the modular element are detailed.

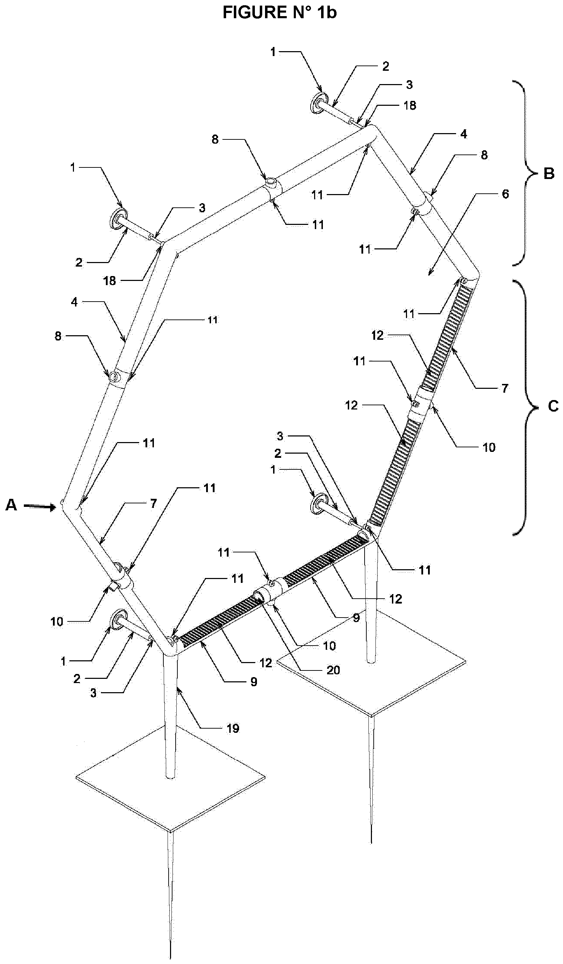

**FIGURE No. 1b:** An isometric view of the invention is shown, adapted for open field installation.

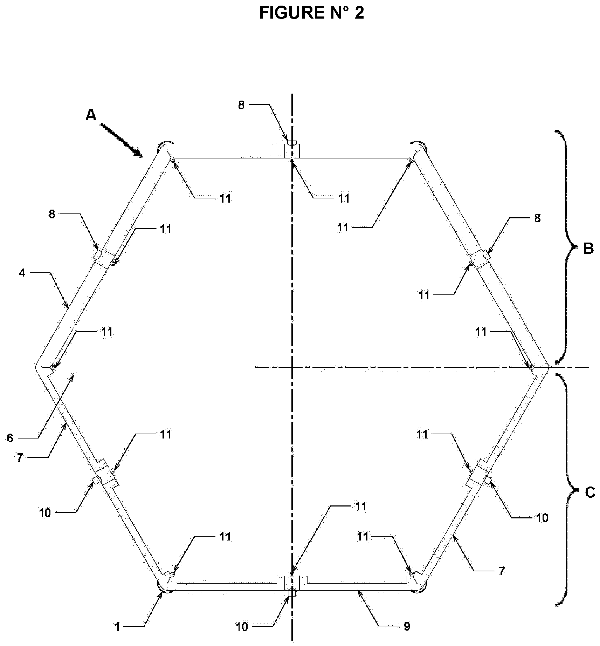

**FIGURE No. 2:** A front view of the invention is shown, where the parts that make up the module are detailed.

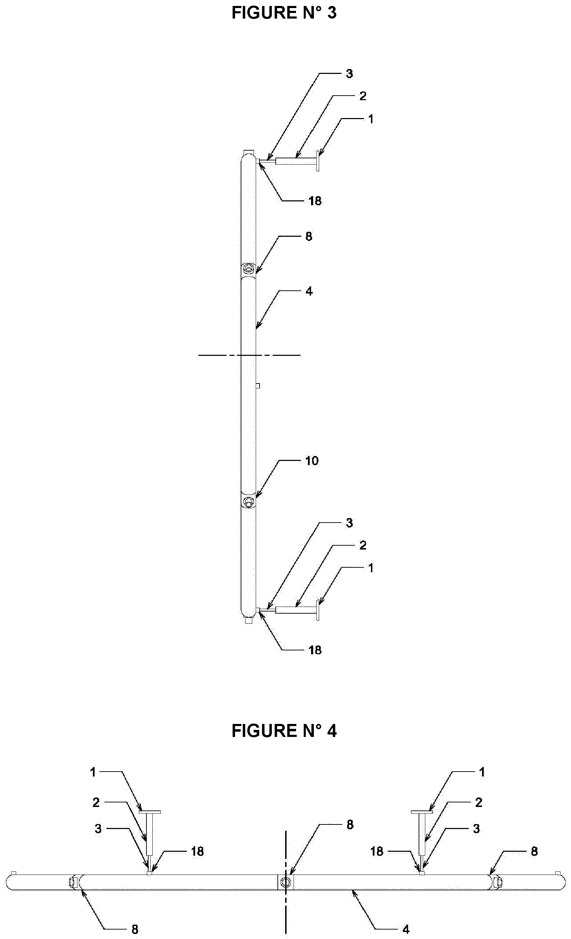

**FIGURE No. 3:** A top view of the invention is shown, where the parts that make up the module are detailed.
**FIGURE No. 4:** A lateral view of the invention is shown, where the parts that make up the module are detailed.

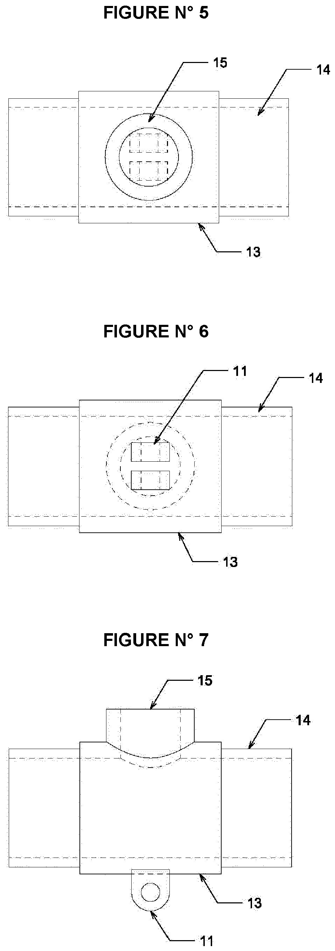

**FIGURE No. 5:** The top view of the inlet fitting is shown, with the indication of its parts.
**FIGURE No. 6:** The bottom view of the inlet fitting is shown, with the indication of its parts.
**FIGURE No. 7:** The lateral view of the inlet fitting is shown, with the indication of its parts.

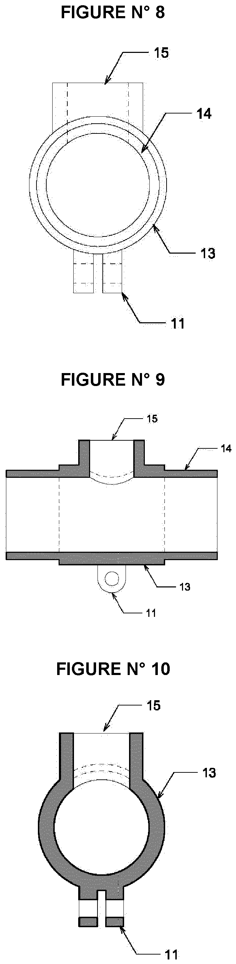

**FIGURE No. 8:** The front view of the inlet fitting is shown, with the indication of its parts.
**FIGURE No. 9:** A longitudinal view of the inlet fitting is shown, with the indication of its parts.
**FIGURE No. 10:** A cross-section view of the inlet fitting is shown, with the indication of its parts.

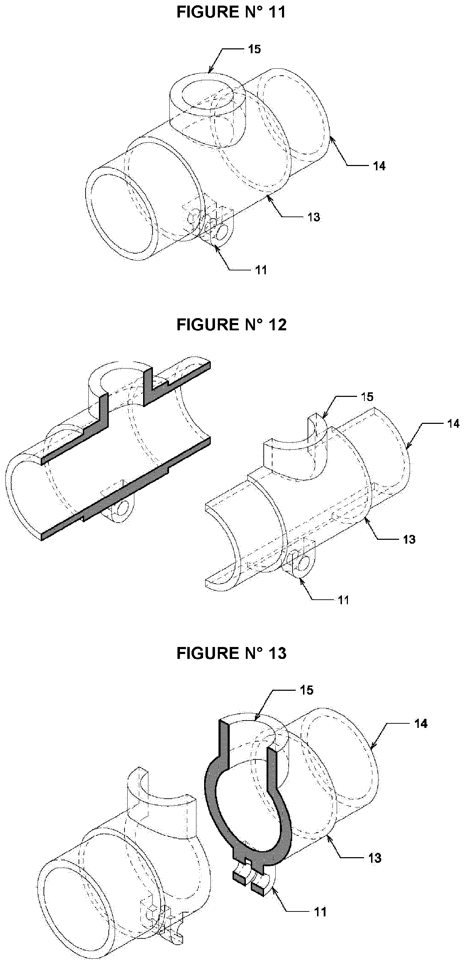

**FIGURE No. 11:** An isometric view of the inlet fitting is shown, with the indication of its parts.
**FIGURE No. 12:** An isometric view of the inlet fitting sectioned lengthwise is shown, with the indication of its parts.
**FIGURE No. 13:** An isometric view of the inlet fitting sectioned crosswise is shown, with the indication of its parts.

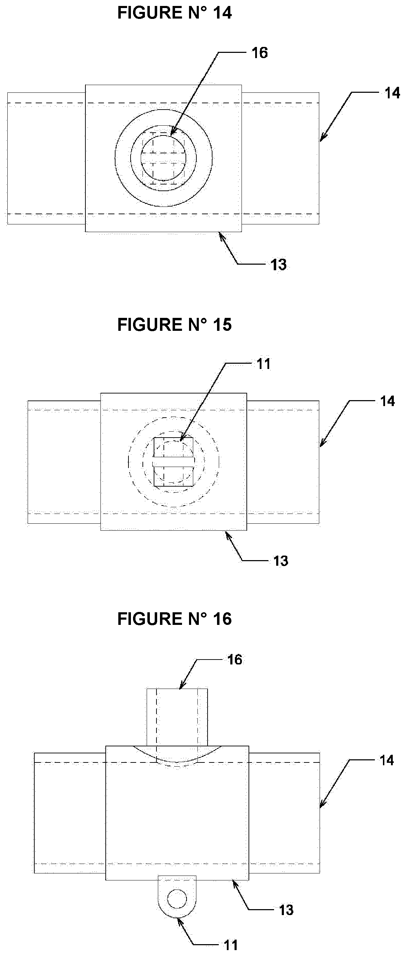

**FIGURE No. 14:** The top view of the outlet fitting is shown, with the indication of its parts.
**FIGURE No. 15:** The bottom view of the outlet fitting is shown, with the indication of its parts.
**FIGURE No. 16:** The lateral view of the outlet fitting is shown, with the indication of its parts.

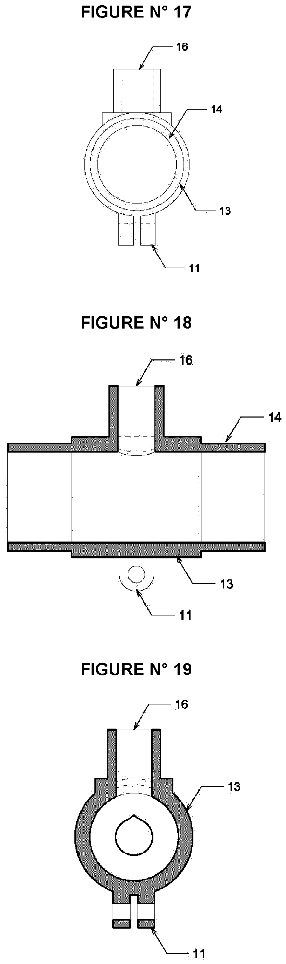

**FIGURE No. 17:** The front view of the outlet fitting is shown, with the indication of its parts.
**FIGURE No. 18:** The longitudinal section of the output fitting is shown, with the indication of its parts.
**FIGURE No. 19:** A cross-section view of the outlet fitting is shown, with the indication of its parts.

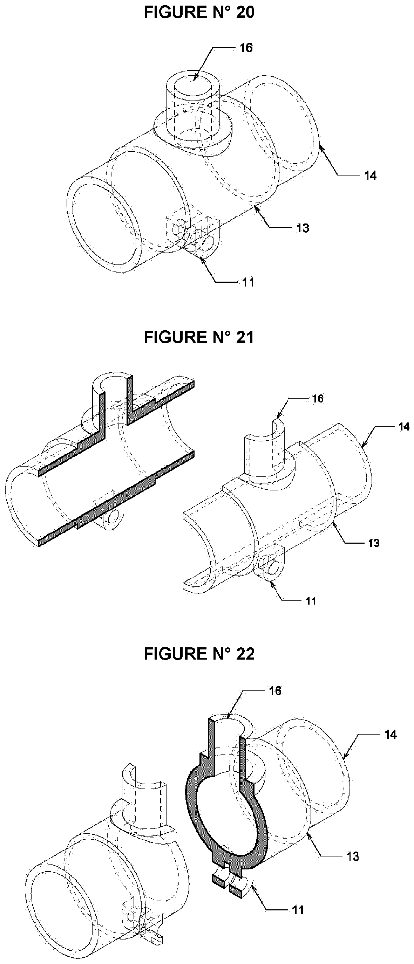

**FIGURE No. 20:** An isometric view of the outlet fitting is shown, with the indication of its parts.
**FIGURE No. 21:** An isometric view of the outlet fitting sectioned lengthwise is shown, with the indication of its parts.
**FIGURE No. 22:** An isometric view of the outlet fitting sectioned crosswise is shown, with the indication of its parts.

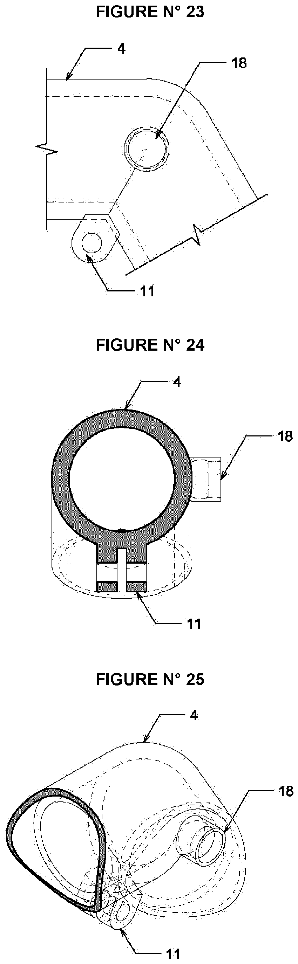

**FIGURE No. 23:** A lateral view of one of the angles of the tubular structure is shown, with the parts that make it up.
**FIGURE No. 24:** A cross-section view of one of the angles of the tubular structure is shown, with the parts that make it up.
**FIGURE No. 25:** A sectioned isometric view of one of the angles of the tubular structure is shown, with the parts that make it up.

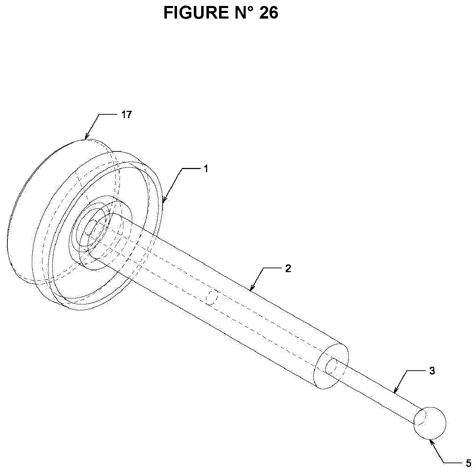

**FIGURE No. 26:** An isometric view of the anchoring elements is shown, with the description of their parts.

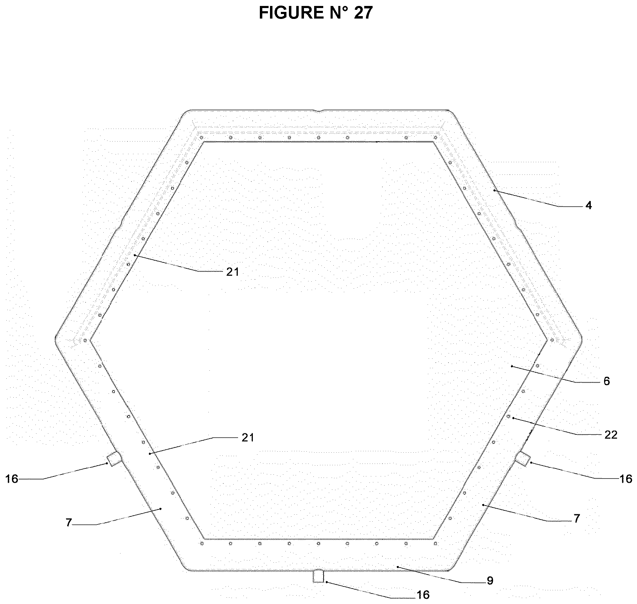

**FIGURE No. 27:** A front view of an alternative module is shown, with the description of its parts.

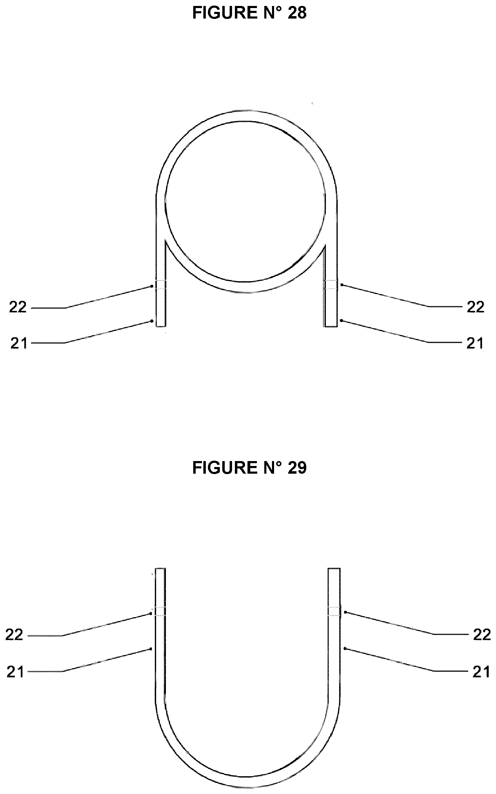

**FIGURE No. 28:** An alternative cross-section view of the tubular support structure is shown.
**FIGURE No. 29:** An alternative cross-section view of the collection tray is shown.

### PREFERRED EMBODIMENT OF THE INVENTION

In the description that follows, please note that the alphanumeric symbols described below refer to parts of the modular element that are represented in the following figures.
- A.: Modular element.
- B.: Top part of the modular element.
- C.: Bottom part of the modular element.
- 1.: Anchorage block to the vertical surface.
- 2.: Support.
- 3.: Plunger.
- 4.: Support tubular structure.
- 5.: Ball joint.
- 6.: Collection membrane or mesh.
- 7.: Side collection tray.
- 8.: Inlet fitting.
- 9.: Bottom collection tray.
- 10.: Outlet fitting.
- 11.: Protuberance.
- 12.: Grid.
- 13.: Body.
- 14.: Coupling.
- 15.: Inlet pipe.
- 16.: Outlet pipe.
- 17.: Suction cup.
- 18.: Joint.
- 19.: Stake.
- 20.: Filter.
- 21.: Vertical plate.
- 22.: Hole.

In relation to the figures and as mentioned before, this invention refers to a modular element (A) consisting of a hexagonal tubular structure supporting a membrane (6) capable of retaining the water that is present in the air in high-moisture environments and of a mounting structure. The modular element comprises a top part (B) consisting of three tubular segments (4) and a bottom part (C) consisting of two side collection trays (7) and a bottom collection tray (9), the bottom trays being made up of tubular segments (7, 9) the top of which is open longitudinally; the tubular structure is made of fiberglass (4) with an internal diameter of 2", which supports synthetic polypropylene membranes (6) with fireproof treatment and UV protection, capable of retaining a high percentage of the humidity present in the atmosphere. The water collected is retained in a fiberglass collection tray (9) where it is filtered with a pumice stone filter (20) to eliminate foreign bodies, and introduced into the building for consumption. This tray also has a fiberglass grid (12) in its top part, which prevents leaves, birds or foreign elements from entering the water.

The tubular structure (A) has a hexagonal shape for an easy connection between modules that allows the structure to grow organically according to the needs of the area to be covered or the water required to be obtained.

Supports (2) of ½" diameter with suction cups (17) or polyurethane anchoring elements, in case the fog collector is coupled to a building on a smooth surface such as glass or similar allow a quick fixation of the structure to the building. The support structure can thus be easily removed without tools. These anchoring elements can also have variable lengths, which allows an arrangement of the modules with different angles in relation to the vertical surface of the building.

Alternatively, these anchoring elements can also have variable lengths thanks to the plunger (3) or piston that enters the support (2); additionally, a ball joint (5) located inside the joint (18) of the modular structure fixing system (4) allows an arrangement of the modules with different angles in relation to the vertical surface of the building.

On its structure, the mesh or membrane (6) has some filaments that stick out towards both sides of the mesh, generating a hairiness that increases the area of the membrane water collection elements.

The water collection element, that is, the mesh or membrane, (6) can be arranged in two or more layers parallel to each other, so that the filaments retain much more water from the atmosphere. That is, the addition of several membrane layers allows a higher percentage of water to be collected from the atmosphere, reducing the loss or quantity of humid air that passes through the membrane without the water contained in the humid air being retained. By placing two mesh layers, it is possible to have up to 2 m² of membrane in 1 m² of structure, which is achieved by folding the layers like an accordion or bellows. In this way, more m² of collecting surface are obtained by m² of building facade.

Each structure is a module. By joining several modules, the facade of a building can be covered with the number of modules required for an adequate water supply. The modules can also be self-supporting on the ground in case open-field humidity collection is required.

## Claims

1. A fog collector with at least one modular element (A) comprising:
- a hexagonal-shaped tubular structure having a top part (B) that has three tubular segments (4), and a bottom part (C) that has two side collection trays (7) and a bottom collection tray (9), the bottom trays being made up of tubular segments (7, 9) the top of which is open longitudinally and is closed at each end thereof; the bottom collection tray (9) has a central fitting (8, 10) with an outlet pipe (10) from where the water is guided toward the building for consumption or diverted to other modular elements by means of a tubular connector (8, 10) with an outlet pipe (10); the collection trays have a protective grid (12) on their top part.
- a membrane (6) having filaments capable of retaining water from the atmosphere, where the filaments protrude from the surface of the mesh, generating a hairiness effect for greater water collection from the atmosphere; and
- a mounting structure having: connecting elements (3), supports (2) with anchorage blocks (1), located at each of the corners of the modular element.

2. The fog collector according to claim 1, wherein each connector (8, 10) has a T-shaped tubular body (13), each end provided with an orifice, this connector has two protuberances (11) parallel and arranged side by side for the fixing of the membrane (6); these protuberances are arranged towards the interior of the module and are provided with a central hole where a strap is inserted to fix the membrane (6) inside each module; the side ends of the module have a coupling (14) with an external diameter slightly smaller than the diameters of the ends of the tubular segments, so the fitting can fit the tubular structure (4) to the ends of the tubular segments; the fitting has an outlet pipe (16) and an inlet pipe (15) depending on whether it is the inlet fitting (8) or the outlet fitting (10).

3. The fog collector according to claims 1 and 2, wherein alternatively the anchorage (1) is provided with a removable suction cup (17) for fixing the modular element on the building surface.

4. The fog collector according to claims1 and 2, wherein alternatively these anchoring elements can also have variable lengths thanks to the plunger (3) or piston that enters the support (2); additionally, a ball joint (5) located inside the joint (18) of the modular structure fixing system (4) allows an arrangement of the modules with different angles in relation to the vertical surface of the building.

5. The fog collector according to claim 1, wherein alternatively the mesh or membrane (6) can be arranged in two or more layers parallel to each other.

6. The fog collector according to claim 1, wherein alternatively the meshes or membranes are placed folded, forming a bellows that expands the area of the water collecting surface of each module.

7. The fog collector according to claim 1, wherein alternatively the modules can be self-supporting by means of stakes (19) which will be inserted into the ground to fix the system.

8. The fog collector according to claims 1 and 2, comprising a filter (20) in the bottom collection tray (9) to remove foreign bodies from the water collected and make it fit for consumption.

9. The fog collector according to claims 1 and 2, wherein the modules can be joined to acquire the size required, forming a structurally stable unit.

10. The fog collector according to claims 1 and 2, wherein the tubular structure and the fittings allow the passage of the collected water from one module to the other.

11. The fog collector according to claims 1 and 2, wherein the inlet and outlet fittings (8, 10) can be fixed, i.e. are part of the tubular structure.

12. The fog collector according to claim 1, wherein the three segments of the tubular support structure (4) of the top part of the modular element (B) and the three collection trays (7, 9) of the bottom part of the modular element (C) have vertical plates (21) parallel to each other that run along the entire length of the section, with holes (22) at similar intervals for fixing the membrane (6) to the module.

13. The fog collector according to claim 1, wherein the modular element (A) has a tubular structure that can adopt any geometric shape.
